# EUROPEAN PATENT APPLICATION

(11) **EP 4 177 817 A1**
(43) Date of publication of application: **10.05.2023**
(21) Application number: 22204786.2
(22) Date of filing: 31.10.2022
(51) Int. Cl.: G06Q 50/06, H02J 3/14, H02J 13/00

(54) **DISPLAY UNIT**

(30) Priority: 09.11.2021 JP 2021182677; 09.09.2022 JP 2022143387
(71) Applicant: Yanmar Holdings Co., Ltd., Osaka-shi, Osaka (JP)
(72) Inventor: SASAKI, Tsubasa, Osaka (JP); TOGASHI, Taichi, Osaka (JP)
(74) Representative: Novagraaf International SA

(57) **Abstract**

[Problem]

Provide technology that can properly operate a management system that manages energy. Or provide a technology that can improve a convenience of a management system that manages energy.

[Solution]

An exemplary display unit is a display unit of a management system that manages energy, wherein the display unit changes a display state of a screen that displays information about the management system, according to an operator of the screen.

## Description

### TECHNICAL FIELD

The present invention relates to a display unit.

### BACKGROUND ART

Conventionally, an electric/heat energy network is known in which electric energy and heat energy are fused together (see, for example, Patent Document 1). The electric/heat energy network connects, for example, a cogeneration system, a renewable energy source, an electricity storage portion, a heat storage portion, a power supply network, a heat energy supply system, a power load, and a heat load. Optimization of an energy management of the electric/heat energy network is executed by a control unit (computer).

### PRIOR ART DOCUMENT

### PATENT DOCUMENT

Patent Document 1: Japanese Patent No. 6423967

### SUMMARY OF INVENTION

### TECHNICAL PROBLEM

The control unit for the energy management of the electric/heat energy network is equipped with an input unit and a display unit as man-machine interfaces. The display unit shows various entry screens, etc.

By the way, there may be a plurality of types of persons who give instructions to a control unit by using a screen of the display unit. The plurality of types of persons includes, for example, a person who is provided with a management system to manage energy (customer), an administrator of the management system, and a service man who is assigned by the administrator of the management system to maintain the system. So configuring that each of the types of persons can give an instruction to the control unit in the same way may cause an inconvenience. Further, by the way, there are many devices that are connected to the electrical and heat energy network. It is convenient if the state of these numerous devices can be easily grasped by the screen displayed by the display unit.

An object of the present invention is to provide a technology that can properly operate a management system that manages energy. Or, an object of the present invention is to provide a technology that can improve a convenience of a management system that manages energy.

### SOLUTION TO PROBLEM

An exemplary display unit of the present invention is a display unit of a management system that manages energy, wherein the display unit changes a display state of a screen that displays information about the management system, according to an operator of the screen. Another exemplary display unit of the present invention is a display unit of a management system that manages energy, wherein the management system displays a state monitoring screen that shows an operation state of a device of the management system. The state monitoring screen includes a device icon that shows the device.

### ADVANTAGEOUS EFFECTS OF INVENTION

The exemplary invention allows for a proper operation of a management system that manages energy. The other exemplary invention allows for an improvement of a convenience of a management system that manages energy.

### BRIEF DESCRIPTION OF DRAWINGS

Fig. 1 is an image diagram of a management system.
Fig. 2 is a block diagram of a system controller.
Fig. 3 is a schematic diagram showing a state of displaying a login screen on a screen of a display unit.
Fig. 4 is a schematic diagram showing a state of displaying a home screen on the screen of the display unit.
Fig. 5 is a schematic diagram showing a state of displaying a user management screen on the screen of the display unit.
Fig. 6 is a schematic diagram showing a state of an authority list screen included in the user management screen.
Fig. 7 is a schematic diagram showing a detailed example of an authority change operation area shown in Fig. 6.
Fig. 8 is a schematic diagram showing a state of displaying a device management screen on the screen of the display unit.
Fig. 9A is a schematic diagram showing an example of a screen displayed when a manual setting area is operated on the device management screen shown in Fig. 8.
Fig. 9B is a schematic diagram showing an example of a screen with a manual setting executed by using the manual setting area.
Fig. 10 is a schematic diagram for explaining a screen display seen when the manual setting area is operated during the manual setting.
Fig. 11 is a schematic diagram showing an example of a screen seen when a manual tab is operated.
Fig. 12 is a schematic diagram showing a device management screen which is displayed on the screen of the display unit and is different from that in Fig. 8.
Fig. 13 is a schematic diagram showing a state of displaying a state monitoring screen on the screen of the display unit.
Fig. 14 is an example of a case where multiple types of device icons are prepared for each device.
Fig. 15 is a diagram exemplifying the state of having changed the screen setting of the state monitoring screen shown in Fig. 13.
Fig. 16 is a schematic diagram showing a state monitoring screen of a modified example.
Fig. 17A is a diagram for explaining about an operation of a control button.
Fig. 17B is a diagram for explaining about the operation of the control button.
Fig. 17C is a diagram for explaining about the operation of the control button.
Fig. 18 is a diagram for explaining about the change in display mode of the control button.
Fig. 19A is a diagram for explaining that the device management screen is in conjunction with the operation of the control button.
Fig. 19B is a diagram for explaining that the device management screen is in conjunction with the operation of the control button.

### DESCRIPTION OF EMBODIMENTS

The following is a detailed description of an exemplary embodiment of the present invention with reference to the drawings.

### <1. Management System>

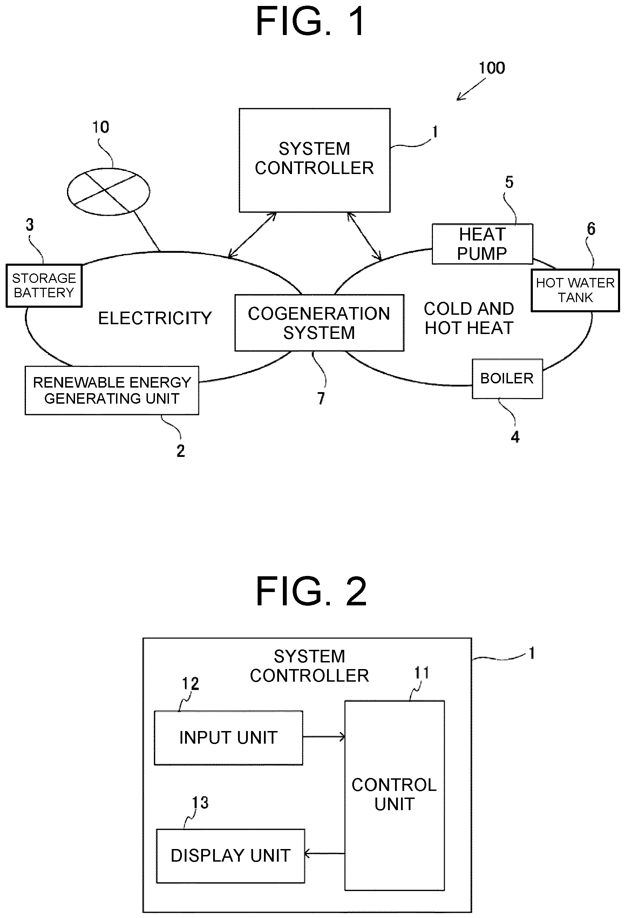

Fig. 1 is an image diagram of a management system 100 according to an embodiment of the present invention. The management system 100 manages energy. That is, the management system 100 is an energy management system. In detail, the management system 100 manages electric energy and heat energy. The management system 100 is applied, for example, to a residential facility, an industrial facility, or a residential/industrial facility.

As shown in Fig. 1, the management system 100 includes a system controller 1. The management system 100 manages electric energy and heat energy, centered on the system controller 1. The management system 100 includes a facility that is so provided as to supply electric power (electricity-related facility) and a facility that is so provided as to supply at least one of hot heat and cold heat (heat-related facility). These facilities (devices) are controlled by the system controller 1.

Note that the hot heat refers to heat that is hot, and the cold heat refers to heat that is cold. That is, when the heat is distinguished into hot heat and cold heat, the hot heat is hot heat and the cold heat is cold heat. For example, the hot heat is air with a higher temperature compared to the room temperature, and the cold heat is air with a lower temperature compared to the room temperature. The facilities shown in Fig. 1 are merely an exemplification and may be changed to a configuration lacking any of the facilities shown in Fig. 1 or to a configuration with an additional facility not shown in Fig. 1.

In the example shown in Fig. 1, the management system 100 includes a renewable energy generating unit 2 and a storage battery 3 each as the electricity-related facility described above. The renewable energy generating unit 2 and the storage battery 3 operate under the control of the system controller 1.

The renewable energy generating unit 2 is a unit that generates electricity using renewable energy such as solar light, wind power, hydraulic power, and geothermal power, for example. The renewable energy generating unit 2 may be, for example, a photovoltaic generating unit or a wind power generating unit. To a power supply line of the management system 100, the renewable energy generating unit 2 can supply the power obtained from the power generation. The storage battery 3 stores power generated by a power generation facility such as the renewable energy generating unit 2, for example, and discharges the stored power as needed. That is, the storage battery 3 can supply power to the power supply line of the management system 100. The storage battery 3 may be, for example, a lithium-ion battery.

The management system 100 is connected to a power system 10. The power system 10 is a large commercial power system that supplies power to a power-receiving facility of the management system 100. The management system 100 can purchase electricity from the power system 10 and receive the power supply. The system controller 1 is so provided as to control whether or not to receive power supply from the power system 10. The system controller 1 may be so provided as to control whether or not power is supplied to the power system 10.

In the example shown in Fig. 1, the management system 100 includes, as the heat-related facilities described above, a boiler 4, a heat pump 5, and a hot water tank 6. The boiler 4, the heat pump 5, and the hot water tank 6 operate under the control of the system controller 1.

To a heat supply line of the management system 100, the boiler 4 can supply the steam or hot water's heat energy obtained by combustion of gas or other fuels. Th heat pump 5 operates an engine fueled by a gas fuel or the like thereby to drive a compression unit for compressing a refrigerant, providing temperature control by the condensation or evaporation heat of the refrigerant. Here, the temperature control is, for example, the temperature control of the air in a room, etc. when the heat pump 5 is applied to an air conditioner, or the temperature control of a chiller circulating liquid when the heat pump 5 is applied to a chiller. The circulating liquid is typically water as an exemplification. The heat pump 5 can perform cooling operation to cool the temperature-controlled object and heating operation to heat the temperature-controlled object. That is, the heat pump 5 can switch between hot heat and cold heat, and supply the hot heat or the cold heat to the heat supply line of the management system 100. The hot water tank 6 is connected to the boiler 4, etc. and is capable of exchanging the water medium in the tank to hot water and storing hot heat. The heat stored in the hot water tank 6 can be supplied to the heat supply line of the management system 100.

In the example shown in Fig. 1, the management system 100 includes a cogeneration system 7 as a facility that is commonly used for the electricity-related facility and heat-related facility described above. The cogeneration system 7 operate under the control of the system controller 1. The cogeneration system 7 uses gas fuel or the like thereby to drive the engine, and generates electricity using a generator that is operated by the driving of the engine. The power generated by the generator can be supplied to the power supply line of the management system 100. To the heat supply line of the management system 100, the cogeneration system 7 can supply the steam or hot water's heat energy obtained by a waste heat recovery boiler that uses the heat (waste heat) generated by the engine.

To a power load included in the management system 100, power is supplied from the renewable energy generating unit 2, the storage battery 3, the power system 10, or the cogeneration system 7. The power load includes, for example, an electric light and various types of electric devices. To a heat load included in the management system 100, the hot heat or cold heat from the boiler 4, the heat pump 5, the hot water tank 6, or the cogeneration system 7 is supplied. The heat load includes, for example, a cooling unit, a heating unit, a refrigerator, a freezer, a hot water tank, etc.

### <2. System Controller>

Fig. 2 is a block diagram of the system controller 1 according to the embodiment of the present invention. As shown in Fig. 2, the system controller 1 has a control unit 11, an input unit 12, and a display unit 13. That is, the management system 100 has the display unit 13. The management system 100 further has the control unit 11 and the input unit 12.

The control unit 11 controls the entire management system 100. The control unit 11 is so configured as to include an arithmetic operation integrated circuit such as a CPU, a RAM (Random Access Memory), a ROM (Read Only Memory), etc. With the arithmetic operation integrated circuit such as the CPU executing an arithmetic processing that accords to a computer program stored in a memory such as ROM, the control unit 11 executes various functions.

The input unit 12 is so provided as to allow inputting of a command to the control unit 11. The input unit 12 includes at least one of a touch screen, a keyboard, a mouse, a touch pad, a button, and a rotary knob, for example. For example, when the input unit 12 is the touch screen, the input unit 12 and the display unit 13 may be an integrated unit. The integrated unit may also include the control unit 11.

The display unit 13, under the control of the control unit 11, displays a screen that displays various information related to the management system 100, and an entry screen for giving the command to the control unit 11. The display unit 13 is composed of, for example, a liquid crystal panel or an organic EL panel. The display unit 13 may include the touch screen, in which case the display unit 13 doubles as the input unit 12, as described above. The display unit 13 may be placed near or remote to the various devices possessed by the management system 100. That is, the configuration of the present embodiment includes the display unit 13 being remote to each device.

### <3. Screen Display of Display Unit>

Next, a display on the screen of the display unit 13 will be described in detail.

### (3-1. Overview of Screen Display)

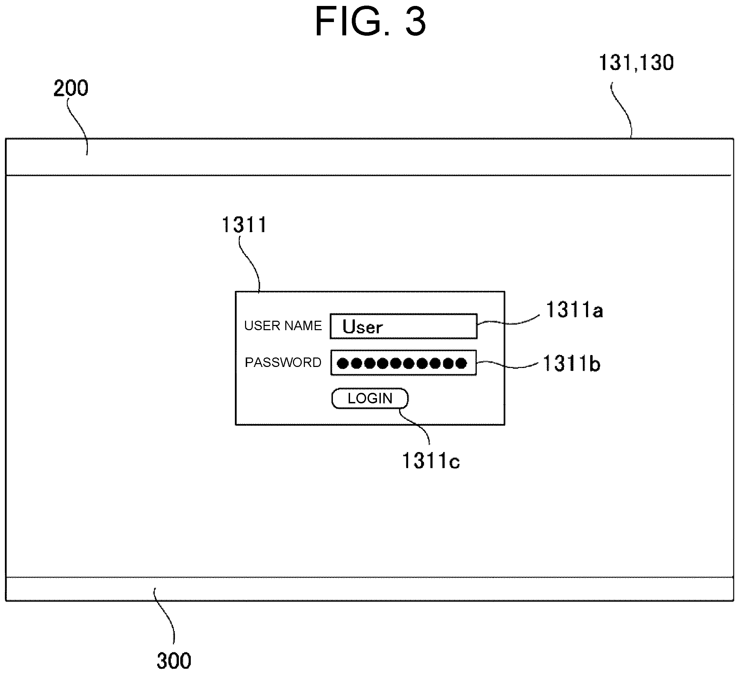

Fig. 3 shows a schematic diagram showing a state of displaying a login screen 131 on a screen 130 of the display unit 13. A person (user) who attempts to access the management system 100 is first required to enter predetermined information on the login screen 131. That is, the screen for displaying various information related to the management system 100, the entry screen for entering the command to the control unit 11, and the like cannot be viewed without the user entering necessary information in the login screen 131.

In the present embodiment, as shown in Fig. 3, the login screen 131 has a login information entry area 1311. The login information entry area 1311 has a user name entry area 1311a for entering the user name, a password entry area 1311b for entering a password preliminarily associated with the user name, and a login button 1311c. That is, on the login screen 131, the user is required to enter the user name and the password.

The user name and the password are entered using, for example, the keyboard or the touch screen. In a configuration using the touch screen or mouse for entering, it may be so configured that the entering is executed using a software keyboard (virtual keyboard) that appears within the login screen 131. The software keyboard may be, for example, so configured as to appear in the login screen 131 when the user touches or clicks the user name entry area 1311a or the password entry area 1311b. A similar software keyboard may be used to enter letters and numbers on any type of screen other than the login screen 131.

In the present embodiment, the top end portion of the login screen 131 has a header area 200 that extends in the right/left direction of the screen 130. In addition, the bottom end portion of the login screen 131 has a footer area 300 that extends in the right/left direction of the screen 130. The header area 200 and the footer area 300 are properly displayed on any type of screen other than the login screen 131. The header area 200 displays, for example, a company logo, a menu related to the screen display, and the like. The footer area 300 displays, for example, time, a user name allowed to log in, and the like.

Operating the login button 1311c by touch or the like after the user name and the password are entered displays a home screen 132. When at least one of the user name and the password is improper, an error message is displayed on the login screen 131, failing to display the home screen 132.

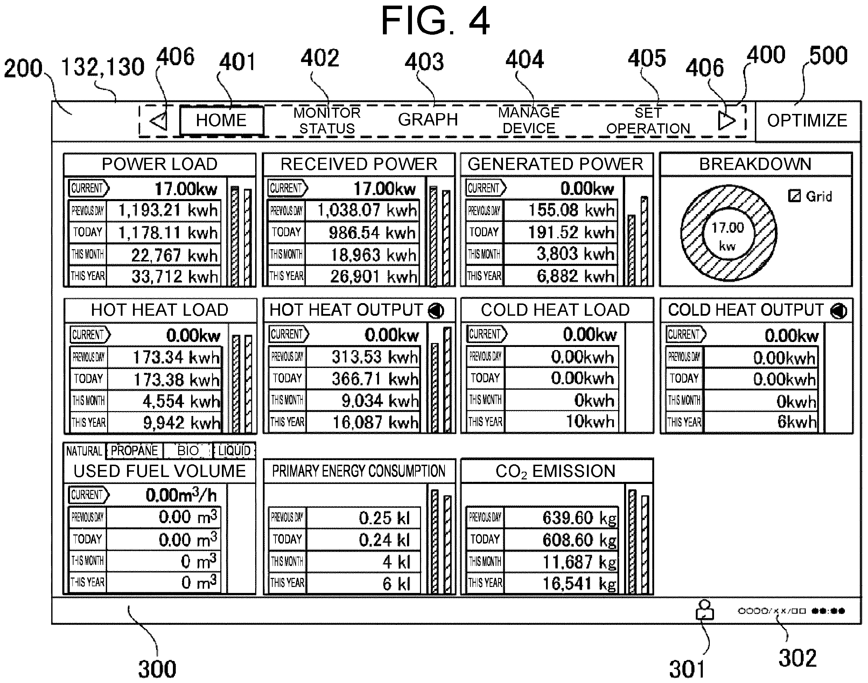

Fig. 4 is a schematic diagram showing a state of displaying the home screen 132 on the screen 130 of the display unit 13. In the present embodiment, the home screen 132 is a screen designed to allow the supply and demand of the electric energy and heat energy in the management system 100 to be viewed at a glance. In the example shown in Fig. 4, the home screen 132 has the header area 200. The header area 200 includes a menu area 400 that shows the type of screen display that can be selected. In the present embodiment, the menu area 400 includes a home button 401, a status monitoring button 402, a graph button 403, a device management button 404, and an operation setting button 405. The touch screen, mouse, or keyboard, for example, may be used to operate each of the buttons 401 to 405.

In the example shown in Fig. 4, the home screen 132 is in a selected state, so a selection display is provided to show the above selected state. In detail, a frame surrounding the home button 401 is displayed as the selection display. However, the selection display is not limited to the frame surrounding the button, but may be configured otherwise, such as a configuration of making a button different in color from another button, or a configuration of making a button different in hatching from another button.

Selecting the status monitoring button 402 displays a status monitoring screen. The status monitoring screen displays details of an operating status of each device included in the management system 100. Each device includes the heat and electric devices. The heat device includes, for example, the heat-related facility described above (including a facility that is used also for the electricity-related facility) and the heat load (air conditioning facility, footbath facility, etc.). The electric device includes, for example, the electricity-related facility (including a facility that is used also for heat-related facility) and the power load described above.

Selecting the graph button 403 displays a graph screen. The graph screen displays, for example, a graph or the like showing the shift in magnitude of the hourly heat and power loads for one day as well as a breakdown of each device's output relative to the load.

Selecting the device management button 404 displays a device management screen. The device management screen displays device management information including input/output information of each device.

Selecting the operation setting button 405 displays an operation setting screen. The operation setting screen includes an entry screen for entering information related to the operation of the management system 100. The information related to the operation includes information about the control method of the management system 100. In the present embodiment, it is so configured that the operation setting screen can select whether an optimization control and a demand control are enabled or disabled.

The optimization control is a control method in which control is executed according to an optimization target selected by the user (typical example is a customer) using the management system 100. The optimization targets include, for example, the cost priority which prioritizes the reduction of various fees borne by the user, the carbon dioxide emission priority which prioritizes the reduction of carbon dioxide emission generated by the device operation, and the primary energy consumption priority which prioritizes the reduction of primary energy consumption required for the device operation. In the present embodiment, the user can select any one of these three optimization targets. The user, when selecting the cost priority, executes the operation control prioritizing the cost reduction, assuming that the optimization control is set to be enabled. The user, when selecting the carbon dioxide emission priority, executes the operation control prioritizing the reduction of carbon dioxide emission, assuming that the optimization control is set to be enabled. The user, when selecting the primary energy consumption priority, executes the operation control prioritizing the reduction of primary energy consumption, assuming that the optimization control is set to be enabled.

The demand control is a control method that so controls the device included in the management system 100 that the power received from the power system 10 does not exceed the target demand value. The target demand value is set at the contract power or less. When the optimization control and the demand control are set to be enabled, in principle, the management system 100 operates by the optimization control, and when the power received approaches the target demand value, the management system 100 switches to the demand control.

As can be seen from the above description, the display unit 13 can display the information, which is managed by the management system 100, by switching to multiple types of screens. In the example shown in Fig. 4, it is possible to switch to at least five different screens including the home screen, the status monitoring screen, the graph screen, the device management screen, and the operation setting screen. However, these screen displays are merely an exemplification, and the types of screens that can be displayed by the display unit 13 may be changed as needed.

In the example shown in Fig. 4, the menu area 400 includes a feed button 406. Operating the feed button 406 by touch or the like switches the type of screen type selection button displayed in the menu area 400. That is, the example shown in Fig. 4 can display any screen other than the five types including the home screen, the status monitoring screen, the graph screen, the device management screen, and the operation setting screen. Examples of screens other than the five types described above include a user management screen for entering user information, and a screen setting screen for setting a screen-related condition.

In the example shown in Fig. 4, the home screen 132 has the footer area 300. The footer area 300 includes an icon area 301 showing the user name and a time information area 302 including date and time. In the present embodiment, operating the icon area 301 by touch or the like can execute logout. As a preferred configuration, operating the icon area 301 displays a confirmation screen on the screen in a pop-up manner to confirm whether or not the logout may be executed, and the confirmation screen allowing the logout executes the logout.

In the present embodiment, as a preferred form, the various screens that can be selected by the menu area 400, such as the home screen 132, further includes a control state display area 500 that shows the control state of the management system 100. With the above configuration; on the screen capable of grasping various types of information, the user can simultaneously obtain information on the control state of the management system 100. That is, user convenience can be improved.

In the embodiment, the control state display area 500 is included in the header area 200. In detail, the control state display area 500 is placed to the right of the menu area 400. However, the position of the control state display area 500 may be changed as needed. In the example shown in Fig. 4, "Optimization" is displayed in the control state display area 500. This shows that the management system 100 is being operated under the optimization control described above. In addition to this, "Demand Control", "Stopped", etc. are displayed in the control state display area 500, for example.

### (3-2. User Management Screen)

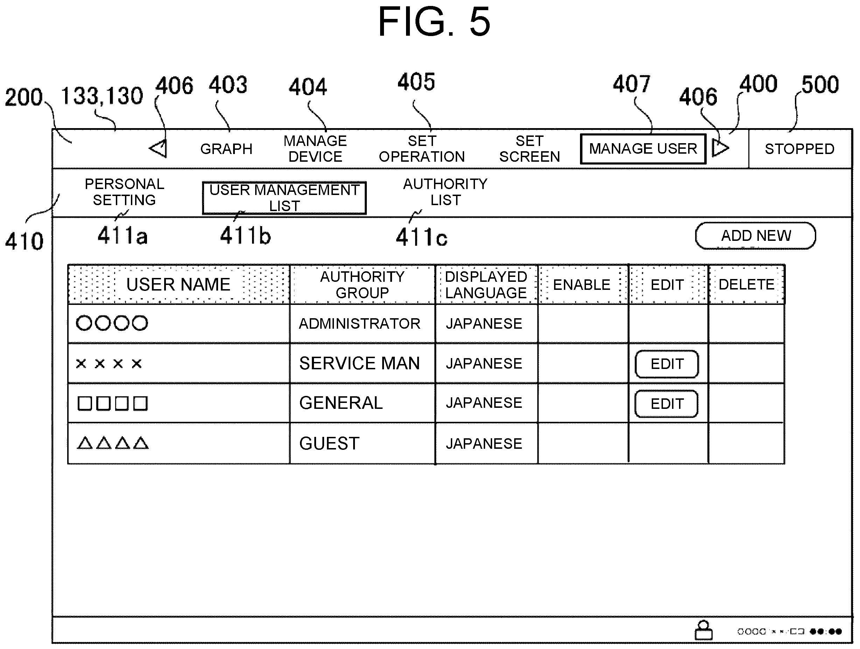

Fig. 5 is a schematic diagram showing a state of displaying a user management screen 133 on the screen 130 of the display unit 13. By touch or the like, operating a user management button 407 displayed in the menu area 400 can select the user management screen 133.

In detail, the user management screen 133 includes a sub-menu area 410. The user management screen 133 displays a content that accords to a button selected from buttons 411a, 411b, and 411c displayed in the sub-menu area 410. In the present embodiment, the buttons displayed in the sub-menu area 410 of the user management screen 133 include a personal setting button 411a, a user management list button 411b, and an authority list button 411c. Fig. 5 shows the screen seen when the user management list button 411b is selected.

In the present embodiment, when any screen other than the user management screen 133 (for example, the home screen 132) is displayed, selecting the user management button 407 automatically selects a specific button that is any of the multiple buttons 411a to 411c displayed in the sub-menu area 410, and displays the screen that corresponds to the selected button. For example, when the personal setting button 411a is designated as the specific button, selecting the user management button 407 automatically selects the personal setting button 411a, displaying a personal setting screen which is a screen for executing a personal setting. In the present embodiment, such a method is also used for any other screen having the sub-menu area 410.

The list displayed on the user management screen 133 shown in Fig. 5 is a list of users (user names) registered in the management system 100. For each user name, an authority group and a display language are shown. The display language is a language set in the personal setting screen displayed by the operation of the personal setting button 411a. The authority group is a group divided according to the different authorities granted to the management system 100. A specific example of the authority granted to the management system 100 is access authority.

In the present embodiment, the authority groups include four types of groups: "Administrator", "Service man", "General," and "Guest". "Administrator", "Service man", "General", and "Guest" in that order have fewer authorities. That is, the "Administrator" has the most authorities and the "Guest" has the least authorities. "Administrator" is a group to which any person who manages the management system 100 belongs. "Service man" is a group to which any person who is assigned by the administrator to maintain the management system 100 belongs.

"General" is a group to which any customer who has signed a contract to use the management system 100 belongs. "Guest" is a group to which any person, etc. who is trying out the management system 100 as part of a demonstration belongs, for example. The type and number of authority groups may be properly changed.

To which authority group each user belongs is determined by the administrator, for example, and cannot be freely determined by each user. The authority of the person accessing the management system 100 is determined by the user name entered on the login screen 131. For example, the "Enable", "Edit", and "Delete" fields shown in Fig. 5 are displayed in different modes depending on the authority group to which the logged-in user (user name) belongs. A button is displayed for an authorized item. In the example shown in Fig. 5, the logged-in user is authorized to make an edit to the registered content of the user belonging to Service man and General. For example, the logged-in user cannot execute "Enable", "Edit", and "Delete" of the logged-in user himself/herself, and of any user belonging to a group higher in authority level than the logged-in user himself/herself.

Note that "Enable" refers to the authority to admit each user as a registrant of the management system 100. When a button is displayed in the "Enable" field, the user operating while viewing that screen can admit the person, whose button is displayed, as a registrant of the management system 100. "Delete" refers to the authority to delete the user, who was once registered, from the registrant. When the button is displayed in the "Delete" field, the user operating while viewing that screen can delete the person, whose button is displayed, from the registrants in the management system 100.

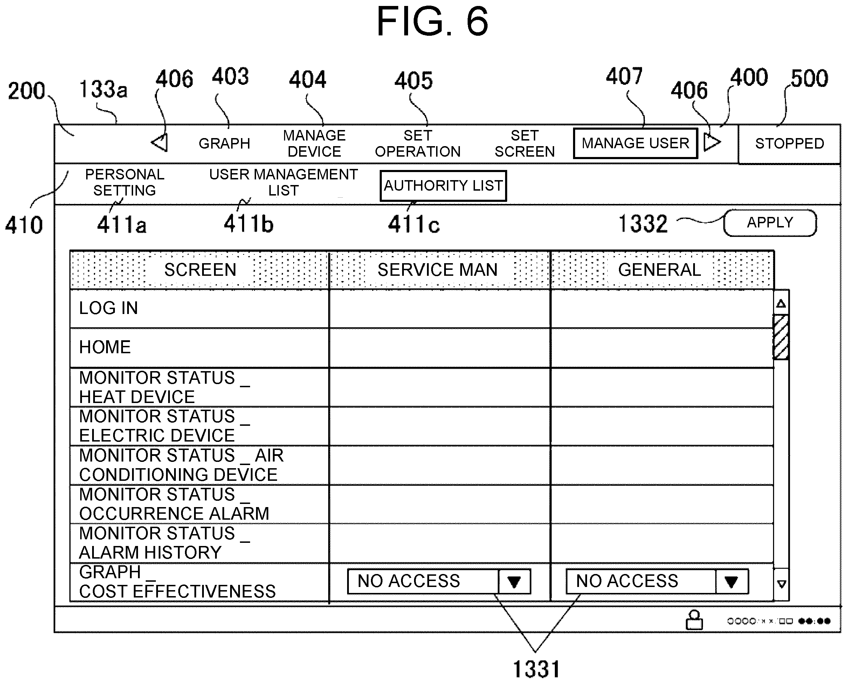

Fig. 6 is a schematic diagram showing a state of an authority list screen 133a included in the user management screen 133. The authority list screen 133a is displayed when the authority list button 411c is operated by touch or the like on the screen shown in Fig. 5, for example. The authority list screen 133a shows the current authority status regarding the authority group that can edit the authority.

In the list shown in Fig. 6, "Screen" shows the name (type name) of the various screens displayed on the screen 130 of the display unit 13. In the example shown in Fig. 6, the authority group that can edit the authority is the Service man and General. The authority statuses on various screens are shown for both groups of Service man and General. In the example shown in Fig. 6, a blank portion shows that the authority cannot be changed. In the screen displayed in Fig. 6, the authority can be changed for both Service man and General for a cost-effectiveness screen included in a graph screen. Due to this, an authority change operation area 1331 to allow for an authority change operation is shown in the appropriate portion.

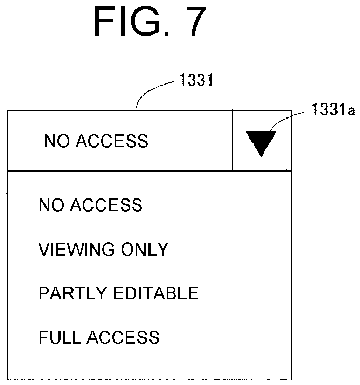

Fig. 7 is a schematic diagram showing a detailed example of the authority change operation area 1331 shown in Fig. 6. Operating, by touch or the like, a selection button 1331a in the authority change operation area 1331 displays, in the authority list screen 133a, a selection item list shown in Fig. 7. In the present example, one item can be selected from "No Access", "View Only", "Partial Edit", and "Full Access". The number and type of items that can be changed in the authority may be properly changed. The number and type of items whose authorities can be changed may differ depending on the type of screen (screen name). Further, different authority groups may have different items for which the authority can be changed.

"No Access" shows that the target screen (in the example shown in Fig. 6, the cost-effectiveness screen) cannot be viewed. Since the target screen cannot be viewed, all of operation items that can be operated when the target screen is displayed are rejected. The "View Only" shows that only viewing of the target screen is allowed, and all of the operation items that can be operated on that screen are rejected. In the View Only screen all operation areas (buttons, etc.) that are displayed when the authority is granted are prevented from being displayed, or are grayed out showing that functions have been disabled as operation areas, for example.

"Partial Edit" shows that viewing of the target screen is permitted, and the operation of some of the operation items that can be operated on that screen is permitted. In the Partial Edit screen, only the operation area (button, etc.) for the authorized item is displayed, for example, and the operation area for the unauthorized item is not displayed. As another example, all operation areas are displayed, but the operation area for the unauthorized item is grayed out. "Full Accessible" shows that the user is allowed to view the target screen and to operate all of the operation items that can be operated on that screen.

The person performing the operation while viewing the authority list screen 133a selects a selectable authority item, and can change the authority by touching an application button 1332 displayed on the authority list screen 133a. Any person, who is not authorized to change the authority, displaying the authority list screen 133a disenables the application button 1332, for example, failing to change the authority.

As can be seen from the above, the display unit 13 changes the display state of the screen displaying the information about the management system 100, according to the type of the operator who uses the screen thereby to execute the operation. This configuration prevents any improper operation by a person who fails to have sufficient knowledge about the management system 100. That is, the management system 100 can be properly operated.

In the present embodiment, the type of operator is determined based on the input information entered on the login screen 131. In detail, the type of operator is determined by the user name entered on the login screen 131. This determination is made by the control unit 11, for example. However, the determination of the operator type may be performed by an information processing unit (computer unit) that is provided separately from the control unit 11.

### (3-3. Device Management Screen)

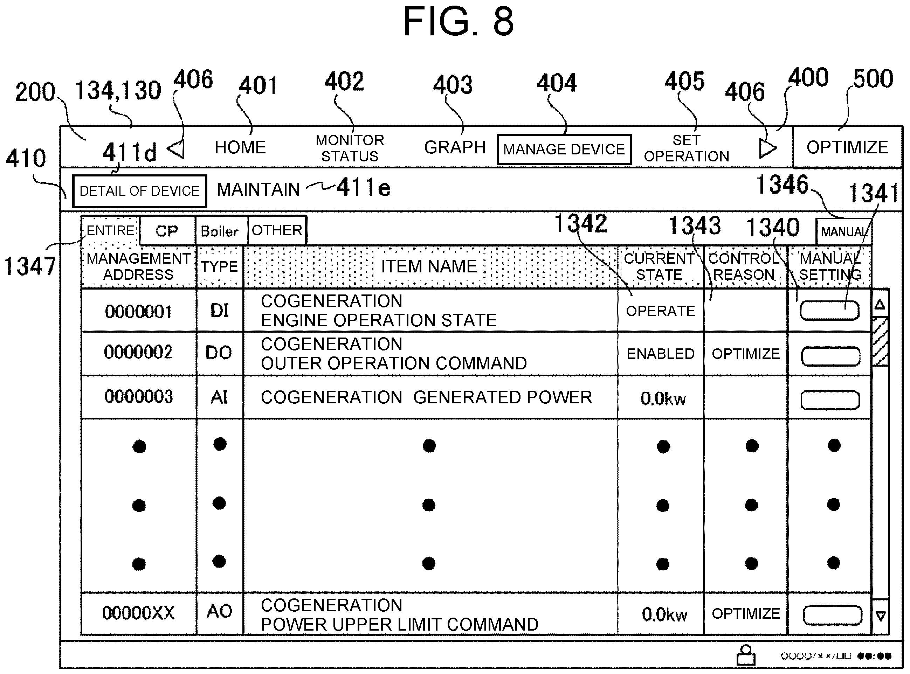

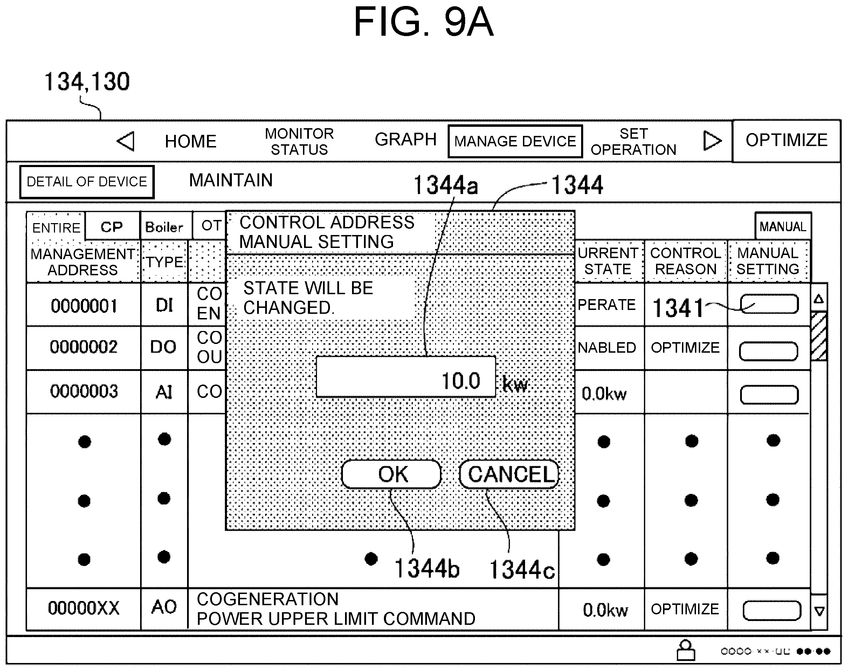

Fig. 8 is a schematic diagram showing a state of displaying a device management screen 134 on the screen 130 of the display unit 13. By touch or the like, operating the device management button 404 displayed in the menu area 400 can select the device management screen 134. Fig. 8 also exemplifies a screen displayed when the user name whose authority group belongs to the service man is entered on the login screen 131. This is also the case in Figs. 9A, 9B, 10, and 11, described below.

In detail, the device management screen 134 includes a sub-menu area 410. The device management screen 134 displays the content that accords to buttons 411d, 411e selected in the sub-menu area 410. Buttons displayed in the sub-menu area 410 of the device management screen 134 include a device detail button 411d and a maintenance button 411e. Fig. 8 shows the state in which the device detail button 411d is selected.

As shown in Fig. 8, selecting the device detail button 411d displays input and output information of each device of the management system 100. That is, the device management screen 134 displays device management information including the input and output information of the device of the management system 100. The devices of the management system 100 include the electricity-related facility and heat-related facility (including a device that is used for both) described above, for example. Specifically, the renewable energy generating unit 2, the storage battery 3, the boiler 4, the heat pump 5, the hot water tank 6, and the cogeneration system 7, for example, are included in the devices of the management system 100. In the present embodiment, the management system 100 has more than one device.

"Management Address" displayed on the device management screen 134 is an address defined in the control unit 11, and, in the present embodiment, includes both a control address and a non-control address. "Type" shows input or output classification. "DI" means digital input. "DO" means digital output. "AI" means analog input. "AO" means analog output. "Item Name" is a specific name of the object whose input or output is managed. "Cogeneration" in Fig. 8 denotes cogeneration system.

"Manual Setting Underway" displayed on the device management screen 134 displays information related to the manual setting of the input or output information for each item managed by using the management address. That is, the device management screen 134 has a manual setting information display area 1340. In the present embodiment, the information displayed in the manual setting information display area 1340 includes the display of the operation button that enables the manual setting. The operation button is operated by touch or the like. In other words, the device management screen 134 has a manual setting area 1341 that allows for the manual setting of the input or output information of the device of the management system 100. In the present embodiment, the manual setting area 1341 is an operation button. Details of the manual setting area 1341 are described below.

The "Current State" displayed on the device management screen 134 shows the current state of the input or output of each item managed by using the management address. That is, the device management screen 134 further has a current state display area 1342 that displays the current state of the input or output of the device of the management system 100. The display of the current state may be a word or a numeral.

The "Control Reason" displayed on the device management screen 134 shows the control-related reason for the current state of the input or output of each item managed by using the management address. That is, the device management screen 134 further has a control reason display area 1343 that displays the control reason for the current state of the input or output of the device.

The display showing the control reason includes "Optimization" showing that the current state is derived from optimization control, and "Manual" showing that the current state is derived from the manual setting, for example. The control reason may be configured to be displayed for all or for some of items managed by using the management address. For example, the control reason may be so configured as not to be displayed (as to be left blank) for the non-control address out of the management addresses.

In the example shown in Fig. 8, the upper left side of the table displaying the input and output information of each device has a device selection tab 1347 for selecting the device for displaying the input and output information. In the present example, the device selection tab 1347 includes, as an example, "Overall", "CP", "Boiler", and "Other". In the example shown in Fig. 8, "Entire" is selected for the device selection tab 1347, showing the input and output information about the entire device. Selecting the symbol "CP" meaning the cogeneration system 7 as the device selection tab 1347 displays the input and output information about the cogeneration system 7. As the device selection tab 1347, selecting "Boiler" which is a symbol meaning the boiler 4 displays the input and output information about the boiler 4. Selecting "Other" as the device selection tab 1347 displays the input and output information on the device excluding the cogeneration system 7 and boiler 4.

That is, for each device, the device management screen 134 can be switched, making it possible to display the unit management information. The type and number of devices included in the device selection tab 1347 may be properly changed. Placement of the device selection tab 1347 may also be properly changed.

Next, the manual setting area 1341, which is configured as an operation button, is described in detail. As described below, the manual setting area 1341 is, as the case may be, not displayed. Fig. 9A is a schematic diagram showing an example of a screen displayed when the manual setting area 1341 is operated on the device management screen 134 shown in Fig. 8. Fig. 9A shows, in detail, an example of the screen seen when the manual setting area 1341 corresponding to the item name "Cogeneration Power Upper Limit Command" is operated by touch or the like.

Operating the manual setting area 1341 displays a first pop-up screen 1344 that allows for changing the input or output information of the corresponding item. The example shown in Fig. 9A displays the first pop-up screen 1344 that allows for changing the power upper limit command (output information). Into an input area 1344a of the power upper limit command on the first pop-up screen 1344, 10.0 kw is entered. That is, the operation to change the output value from the current state (power upper limit command 0 kw) is done. For example, a software keyboard including a numeric keypad may be used to input the power upper limit command.

In the state shown in Fig. 9A, operating an OK button 1344b in the first pop-up screen 1344 by touch or the like executes the change of the power upper limit command. Also, operating a CANCEL button 1344c in the first pop-up screen 1344 by touch or the like deletes the first pop-up screen 1344 thereafter to return to the screen shown in Fig. 8, without executing the change of the power upper limit command.

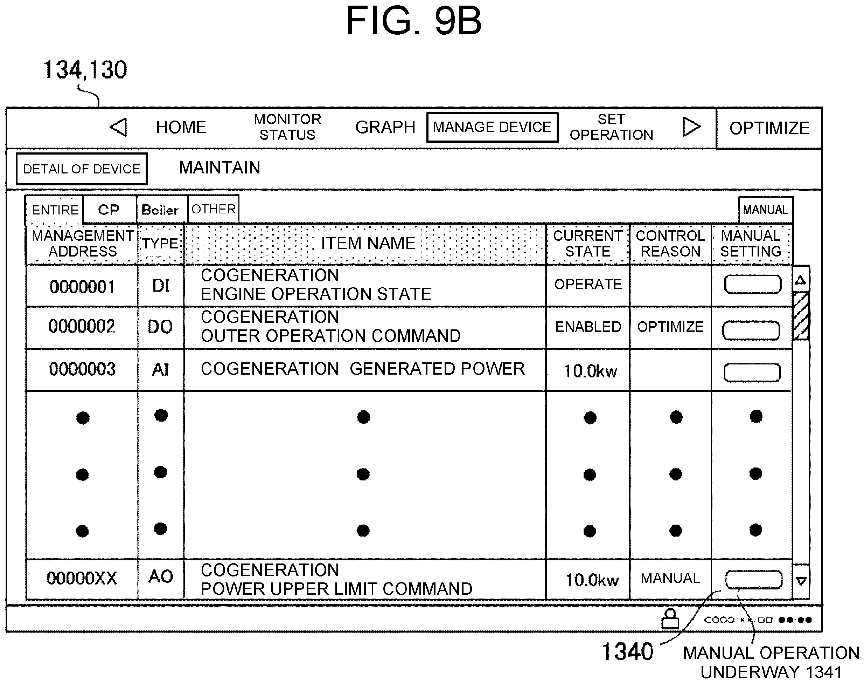

Fig. 9B is a schematic diagram showing an example of a screen with the manual setting executed by using the manual setting area 1341. Fig. 9B shows, in detail, an example of the screen seen when the OK button 1344b is operated by touch or the like in Fig. 9A. Operating the OK button 1344b deletes the first pop-up screen 1344, showing, in the manual setting information display area 1340, a display notifying that the manual setting have been executed. In Fig. 9B, a text "Manual Setting Underway" appears overlapping the manual setting area 1341, as an example. That is, the user who has seen the manual setting area 1341 displaying the overlapping text "Manual Setting Underway", can recognize that a corresponding item is being manually set. Since it is sufficient to notify the user that the manual setting is being executed, it may be so configured that the color of the manual setting area 1341 is changed, instead of overlapping the text "Manual Setting Underway", for example.

In the example shown in Fig. 9B, the manual setting changed the power upper limit command of the cogeneration system 7 to 10.0 kw, therefore having automatically changed the input value of the generated power of the cogeneration system 7 (item name: cogeneration power) from 0 kw shown in Fig. 8 to 10 kw.

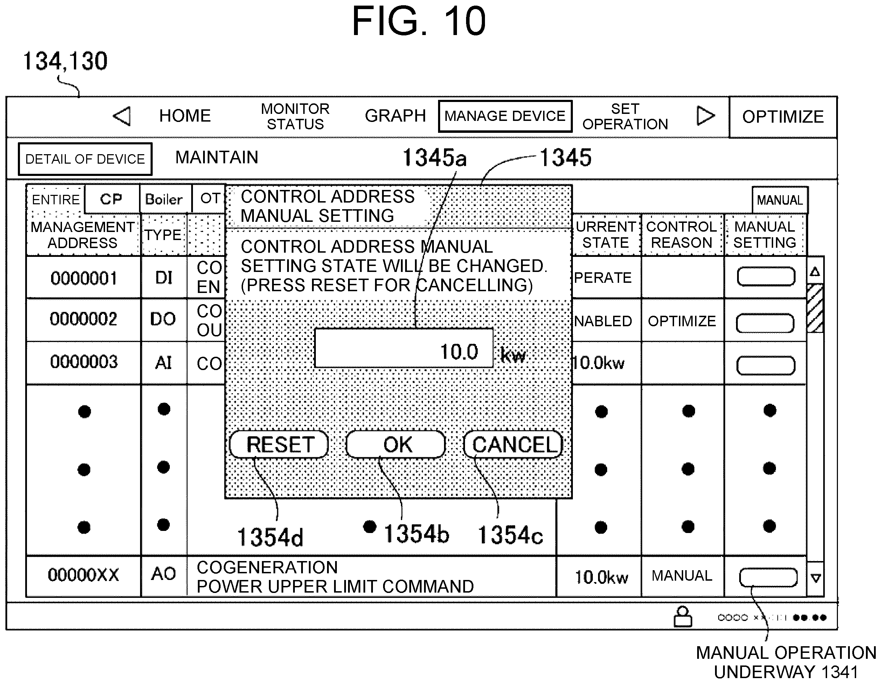

Fig. 10 is a schematic diagram for explaining a screen display seen when the manual setting area 1341 is operated during the manual setting. As shown in Fig. 10, operating the manual setting area 1341, in which "Manual Setting Underway" is displayed overlapping, by touch or the like displays a second pop-up screen 1345. The second pop-up screen 1345, like the first pop-up screen 1344, includes an input area 1345a where a value can be entered, an OK button 1345b, and a CANCEL button 1345c. Entering the value in the input area 1345a thereafter to operate the OK button 1345b by touch or the like can further change the value that was manually set previously.

Unlike the first pop-up screen 1344, the second pop-up screen 1345 includes a RESET button 1345d. Operating the RESET button 1345d by touch or the like can return to the state before executing the manual setting. Operating the RESET button 1345d by touch or the like in the screen shown in Fig. 10 returns to the screen shown in Fig. 8. Using the RESET button 1345d can easily return to the state before executing the manual setting, therefore making the RESET button 1345d a function convenient for the user.

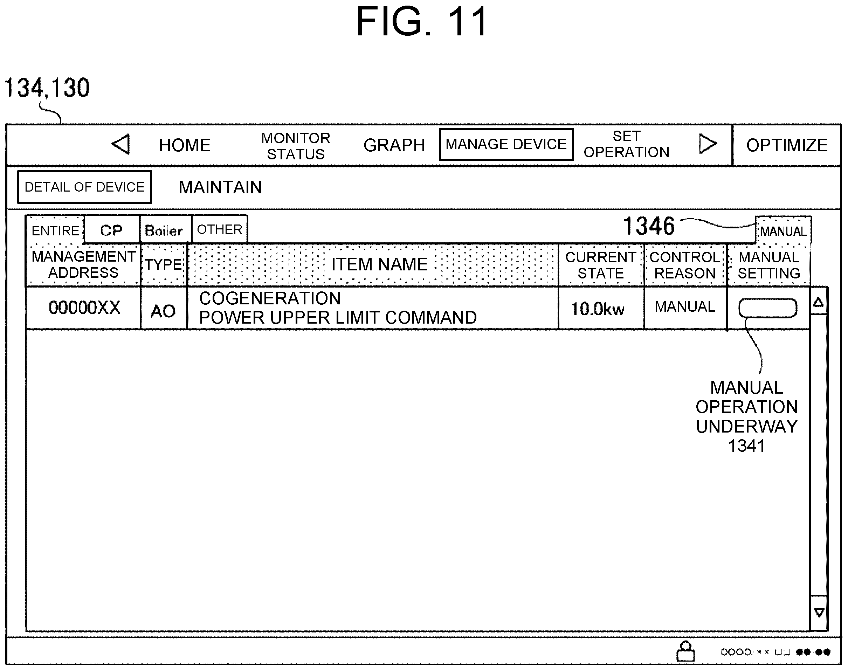

Further, in the present embodiment, as shown in Fig. 8, for example, the upper right side of the table displaying the input and output information of each device is provided with a manual tab 1346 to display the input and output information only on the manually set item. Fig. 11 is a schematic diagram showing an example of the screen seen when the manual tab 1346 is operated. As shown in Fig. 11, operating the manual tab 1346 by touch or the like display, only for the manually set item currently, a screen showing the current state of the input or output. In the example shown in Fig. 11, only one item is being manually set currently, so the current state, etc., is displayed for that item only. When there are multiple items for which the manual setting is being made currently, current states, etc. of all of the multiple items will be displayed.

That is, in the present embodiment, the device management screen 134 further has an operation area 1346 that displays the device management information only for the item that has been set by using the manual setting area 1341. Placement of the manual tabs 1346 may be properly changed.

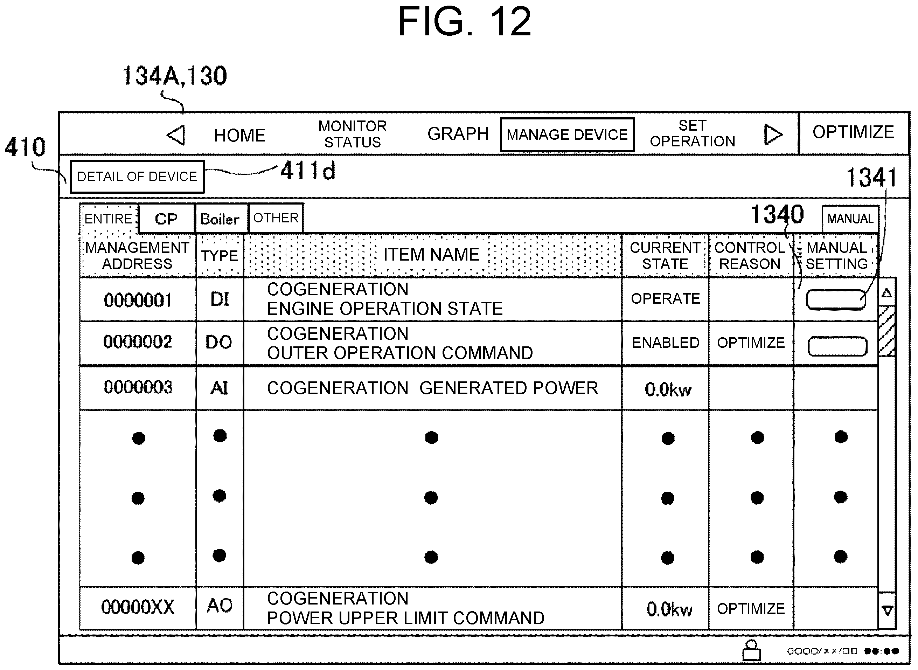

Fig. 12 is a schematic diagram showing a device management screen 134A which is displayed on the screen 130 of the display unit 13 and is different from the counterpart in Fig. 8. Fig. 12 exemplifies the screen displayed when the user name whose authority group belongs to General is entered on the login screen 131. As described above, Fig. 8 is the example of the screen displayed when the user name whose authority group belongs to the service man is entered on the login screen 131. That is, the types of persons who use the device management screen thereby to execute the operation are different between Fig. 12 and Fig. 8. Like Fig. 8, Fig. 12 is the screen seen when the device detail button 411d is selected.

On the device management screen 134A shown in Fig. 12, only the device detail button 411d is displayed in the sub-menu area 410. This is different from the fact that, in the device management screen 134 shown in Fig. 8, the device detail button 411d and the maintenance button 411e are displayed in the sub-menu area 410. The maintenance button 411e is for maintenance of the device of the management system 100, and therefore is not necessarily needed for the user of General (customer). Due to this, it is so configured that the maintenance button 411e is not displayed when the login is executed by the user name whose authority group belongs to General.

Note that the configuration here is such that the maintenance button 411e is not displayed for the unauthorized user, but this is merely an exemplification. It may be so configured that the maintenance button 411e is displayed even for the unauthorized user, and the user's operation on the maintenance button 411e is disabled. In this case, it may be so configured that the maintenance button 411e is grayed out so as to make the user aware that the operation is disabled, for example.

On the device management screen 134A shown in Fig. 12; for some items managed by the management address, the manual setting area 1341, which is configured as the operation button, is not displayed in the manual setting information display area 1340. Specifically, for the item names "Cogeneration Power" and "Cogeneration Power Upper Limit Command", the manual setting area 1341 is not displayed in the manual setting information display area 1340. That is, when the user logs in with the user name whose authority group belongs to General, the manual setting cannot be made for some items for which the service man can make the manual setting. It is sufficient that some items are properly determined, and the configuration of the present embodiment is merely one example.

As can be understood from the above, in the display unit 13 of the present embodiment, the item that can be set by using the manual setting area 1341 changes depending on the type of operator who uses the screen thereby to execute the operation.

In the present embodiment, the number of manual setting areas 1341 displayed on the device management screen varies depending on the type of operator (user). In the present embodiment, it is so configured that, for each item, the manual setting area 1341 is displayed for the authorized user, and the manual setting area is not displayed for the unauthorized user. However, the above is merely an exemplification. It may be so configured that the manual setting area 1341 is displayed even for the unauthorized user, and the user's operation on the manual setting area 1341 is disabled. In this case, it may be so configured that the manual setting area 1341 is grayed out so as to make the user aware that the operation is disabled, for example.

### (3-4. State Monitoring Screen)

The display unit 13 displays a state monitoring screen showing the operation state of the device possessed by the management system 100.

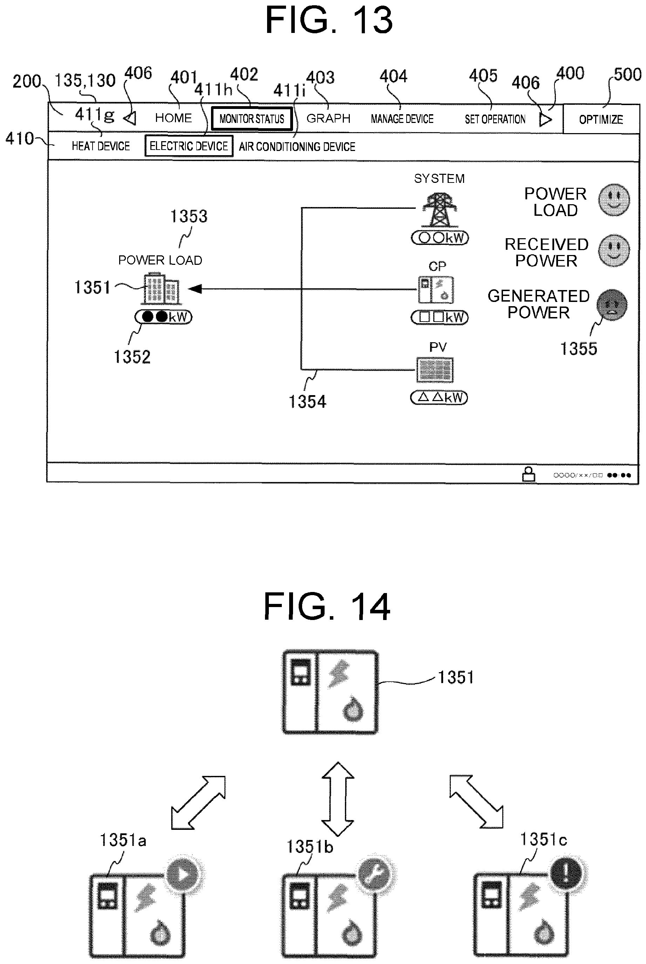

Fig. 13 is a schematic diagram showing the state of displaying a state monitoring screen 135 on the screen 130 of the display unit 13. By touch or the like, operating the state monitoring button 402 displayed in the menu area 400 can select the state monitoring screen 135. As shown in Fig. 13, the state monitoring screen 135 includes a control state display area 500 that shows the control state of the management system 100. Similar to the home screen 132 described above, the control state display area 500 is included in the header area 200.

As shown in Fig. 13, the state monitoring screen 135 includes the sub-menu area 410. The sub-menu area 410 is a band-shaped area provided beneath the header area 200. The state monitoring screen 135 displays a content that accords to a button selected from among multiple buttons 411g, 411h, and 411i displayed in the sub-menu area 410. In the present embodiment, the buttons displayed in the sub-menu area 410 of the state monitoring screen 135 include a heat device button 411g, an electric device button 411h, and air conditioning device button 411i.

Fig. 13 shows the screen seen when the electric device button 411h is selected. As shown in Fig. 13, when the electric device button 411h is selected, the state monitoring screen 135 displays an operation state of the electric device. The example shown in Fig. 13 shows the operation states of the photovoltaic (PV) generating unit, the cogeneration system (CP), the power system, and the power load.

Although not shown in the drawings; when the heat device button 411g is selected, the state monitoring screen 135 displays the operation state of the heat device. The state monitoring screen 135 with the heat device button 411g selected shows the operation states of, for example, the boiler, the chiller, the cogeneration system, and the heat load. When the air conditioning device button 411i is selected, the state monitoring screen 135 displays the operation state of the air conditioning device. The state monitoring screen 135 with the air conditioning device button 411i selected shows the operation state of, for example, a gas heat pump.

As can be seen from the above, the state monitoring screen 135 includes plural screens that can be switched according to the type of device. That is, the state monitoring screen 135 is so provided as to be switchable according to the type of device. Types of devices include, for example, the heat device, the electric device, and the air conditioning device. In other words, the state monitoring screen 135 includes plural screens that can be switched according to the type of energy. The screen showing the operation state is so provided as to be switchable according to the type of device (or energy), thereby making it possible to easily view, as a moderate amount, the information on the operation state shown on the screen.

In the present embodiment, when any screen (for example, the home screen 132) other than the state monitoring screen 135 is displayed, selecting the state monitoring button 402 automatically selects a special button that is any of the multiple buttons 411g to 411i displayed in the sub-menu area 410, thus displaying the screen that corresponds to the selected button. Which button is to be designated as the special button may be properly determined. For example, when the heat device button 411g is designated as the special button, selecting the state monitoring button 402 automatically selects the heat device button 411g, thus displaying the screen indicating the operation state of the heat device.

As shown in Fig. 13, the state monitoring screen 135 shows the operation state of the device below the sub-menu area 410. The state monitoring screen 135 includes a device icon 1351 showing the device possessed by the management system 100. The device icon 1351 is changed according to the type of device. In the example shown in Fig. 13, the photovoltaic (PV) generating unit, the cogeneration system (CP), the power system, and the power load are shown by device icons 1351 different from each other. By using these device icons 1351 thereby to show the operation state of each device, the user having viewed the screen can easily grasp the operation state of the device. Being changed according to the type of device may mean that the display unit 13 recognizes the type of device, thus automatically selecting the device icon 1351 according to the recognized type. Also, being changed according to the type of device may mean that the operator of the display unit 13 manually selects the device icon 1351 according to the type of device.

Further, the state monitoring screen 135 includes a numerical information area 1352 that shows the operation state of the device in a numerical value. The numerical information area 1352 is provided for each device. It is preferable that the numerical information area 1352 provided for each device is placed around the circumference of the device icon 1351 provided for each device. In the example shown in Fig. 13, each of the numerical information areas 1352 is placed below one of the device icons 1351. Displaying the numerical information area 1352 on the state monitoring screen 135 makes it easy to accurately grasp the operation state of the device. Further, the numerical information area 1352 may be prevented from being displayed.

Further, the state monitoring screen 135 includes a letter information area 1353 that shows information about the device in letter. The letter information area 1353 is provided for each device. It is preferable that the letter information area 1353 provided for each device is placed around the device icon 1351 provided for each device. In the example shown in Fig. 13, each of the letter information areas 1353 is placed above one of the device icons 1351. Displaying the letter information area 1353 on the state monitoring screen 135 can make it easy to grasp the type of device. The letter information area 1353 may be prevented from being displayed.

Further, the state monitoring screen 135 includes a connecting line 1354 connecting between the multiple device icons 1351. Displaying the connecting line 1354 on the state monitoring screen 135 can make it easy to grasp the relation between the multiple devices. It is preferable that the connecting line 1354 is an arrow line. This makes it easy to grasp the flow of the energy. For example, in the example shown in Fig. 13, the direction of the arrow makes it possible to immediately grasp, in view of the state monitoring screen 135, that the energy (power) is flowing from the photovoltaic (PV) generating unit, the cogeneration system (CP), and the system to the power load. The connecting line 1354 may be prevented from being displayed.

It is preferable that the connecting line 1354 is changed in display mode according to the type or mode of the energy. Types of energy include, for example, electric energy, heat energy, cold heat, and hot heat. Modes of energy include, for example, giving heat and taking heat. Another mode of energy includes, for example, the supply and demand of electric power.

The change in the display mode may be, for example, a change in the color of or a change in the line type of the connecting line 1354. For example, the connecting line 1354 which shows the cold heat, and the connecting line 1354 which shows the hot heat may differ from each other in display mode. The connecting line 1354 showing the cold heat may be displayed by a blue line, and the connecting line 1354 showing the hot heat may be displayed by a red line. In addition, the connecting line 1354 which shows the flow of energy giving heat, and the connecting line 1354 which shows the flow of the energy that takes heat may be different in display mode. The connecting line 1354 showing the flow of energy giving heat may be shown as a solid line, and the connecting line 1354 showing the flow of the energy that takes heat may be shown by a broken line.

Further, the state monitoring screen 135 includes an energy state display icon 1355 that shows the energy state associated with the operation of the device. In the example shown in Fig. 13, the energy state display icon 1355 is displayed on the right side of the state monitoring screen 135, but the display location thereof may be changed as needed. The energy state display icon 1355 may be prevented from being displayed.

Multiple types of energy state display icons 1355 are prepared, and are automatically switched according to the energy state. Displaying, on the state monitoring screen 135, the energy state display icon 1355 with its displaying switched according to the energy state allows the user to easily grasp the energy state of the management system 100.

The energy state is, in detail, the energy state of the management system 100. The energy state may be determined based on, for example, an operation plan value. For example, when the management system 100 is operating with the energy close to the operation plan value, the energy state may be determined to be "good". When the management system 100 is operating with the energy deviating from the operation plan value, the energy state may be determined to be "poor". In the above configuration where a two-step determination is made, there may be two types of energy state display icons 1355.

In the example shown in Fig. 13, the energy is subdivided into plural types of energy. Then, for each of the subdivided energy, the energy state is shown by using the energy state display icon 1355. For the power load and the received power, the energy state display icon 1355 showing that the energy state is good is displayed. For the generated power, the energy state display icon 1355 showing that the energy state is poor is displayed.

The energy state may be shown by more than two steps, in which case the energy state display icon 1355 will have more than two types. Further, for being the screen showing the operation state of the electric device, the screen shown in Fig. 13 displays the state of the energy related to the electricity. For example, when the screen shows the operation state of the heat device, the state of the heat-related energy may be displayed. For example, the energy state, such as a thermal load, a thermal output, a cold load, and a cold output, may be displayed by the energy state display icon 1355.

The device icon 1351 displayed on the state monitoring screen 135 may be automatically switched according to the operation state of the device. In this case, multiple types of device icons 1351 may be prepared for each device. Fig. 14 is an example of a case where multiple types of device icons 1351 are prepared for each device.

In Fig. 14, the device icon 1351 is an example of a device icon of the cogeneration system (CP). The device icon 1351 shown at the upper step in Fig. 14 is a basic form of the device icon showing the cogeneration system. This basic form of the device icon 1351 is displayed in situations other than the three cases described below.

A device icon 1351a shown on the left side of the lower step in Fig. 14 is a device icon showing that the cogeneration system is in the operation state. The device icon 1351a is displayed when the cogeneration system is the operation state. A device icon 1351b shown in the lower middle in Fig. 14 is a device icon showing that the cogeneration system is under maintenance. The device icon 1351b is displayed when the cogeneration system is under maintenance. A device icon 1351c shown on the right side of the lower step in Fig. 14 is a device icon that shows that a warning (alarm) is issued to the cogeneration system. The device icon 1351c is displayed when the warning is issued to the cogeneration system.

The above shows the case where the device is the cogeneration system, but multiple types of device icons may be prepared for the other device as well.

Further, at least one of the display position and size of the device icon 1351 may be provided in a changeable manner. Similarly, at least one of the display position and size of the numerical information area 1352 may be provided in a changeable manner. Further, at least one of the display position and size of the letter information area 1353 may be provided in a changeable manner. Further, according to the change in the display position of the device icon 1351, etc., the display position, etc. of the connecting line 1354 may be provided in a changeable manner. For example, the thickness of the connecting line 1354 may be provided in a changeable manner. Acquiring these configurations makes it possible to make the screen display that accords to the user's preference.

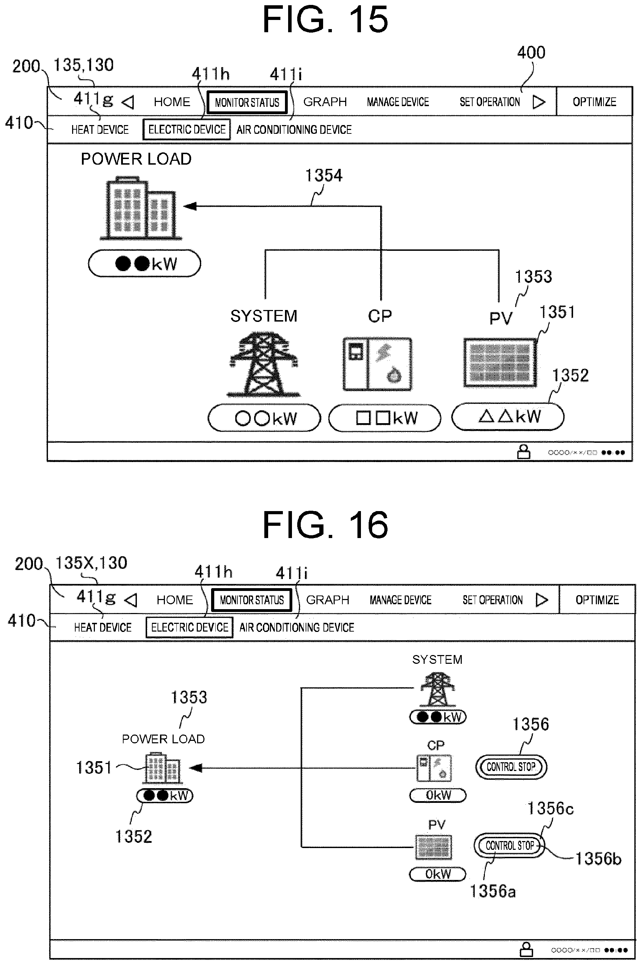

Fig. 15 is a diagram exemplifying the state of having changed the screen setting of the state monitoring screen 135 shown in Fig. 13. In the example shown in Fig. 15, the display position of each device icon 1351 is changed compared to that in Fig. 13. In addition, along with the change in the display position of each device icon 1351, the display positions of each numerical information area 1352 and each letter information area 1353 are also changed compared to the case in Fig. 13.

In the example shown in Fig. 15, along with the change in the position of the device icon 1351, etc., the display position and mode of the connecting line 1354 are also changed compared to the case in Fig. 13. In the example shown in Fig. 15, each device icon 1351, each numerical information area 1352, and each letter information area 1353 are larger in size of the display than in the case in Fig. 13. In the example shown in Fig. 15, the energy state display icon 1355 is in a state of not being displayed.

Changing the position and size of the display may be done, for example, by using the screen setting screen that is displayed by selecting the screen setting button (not shown) which is so provided as to be displayable in the menu area 400. In the screen setting screen, the device icon 1351 which the user wants to display on the state monitoring screen 135 may be optionally selectable. Then, the various device icons 1351 selected may be set at optional positions within a displayable range on the state monitoring screen 135. For the same type of device icon 1351, multiple device icons 1351 of different sizes are prepared; the size of the device icon 1351 may be changed depending on which of the multiple device icons 1351 of different sizes is selected. However, it may be so configured that the size of the device icon 1351 is optionally changeable.

Further, in the screen setting screen, the type selection, display position, and size of the numerical information area 1352, the letter information area 1353, and energy state display icon 1355 may be freely set, similar to the device icon 1351. Further, in the screen setting screen may be so provided as to allow for positioning, etc. of the connecting line 1354.

### (3-5. Modified Example)

Fig. 16 is a schematic diagram showing a state monitoring screen 135X of a modified example. The state monitoring screen 135X of the modified example is substantially the same as the state monitoring screen 135 shown in Fig. 13 described above. The state monitoring screen 135X includes a control button 1356 that allows for changing the control state of the device possessed by the management system 100. This point differs from the above embodiment.

In detail, the control button 1356 is a virtual button that is displayed on the state monitoring screen 135X. The control button 1356 is a soft button that switches the control of the device between run and stop (ON and OFF). Operating the control buttons 1356 displayed on the state monitoring screen 135X by touch or the like makes the switching between run and stop of control of the device. Displaying the control button 1356 on the state monitoring screen 135X makes it possible to manually set, on the state monitoring screen 135X, the run and stop of control of the device.

Further, the control buttons 1356 may be provided for all devices that are displayed on the state monitoring screen 135X and that can be controlled by the management system 100, or may be provided only for some of the devices. In the example shown in Fig. 16, the control buttons 1356 are provided for the photovoltaic generating unit (PV) and cogeneration system (CP). For example, the control button 1356 may be provided for only one of the photovoltaic generating unit (PV) and the cogeneration system (CP).

The control button 1356, like the device icon 1351, etc., may be so provided as to be changeable in display position and size. In the example shown in Fig. 16, each of the control buttons 1356 associated one of the devices is placed around the device icon 1351 showing the associated device. In detail, each of the control buttons 1356 is placed to the right of one of the device icons 1351.

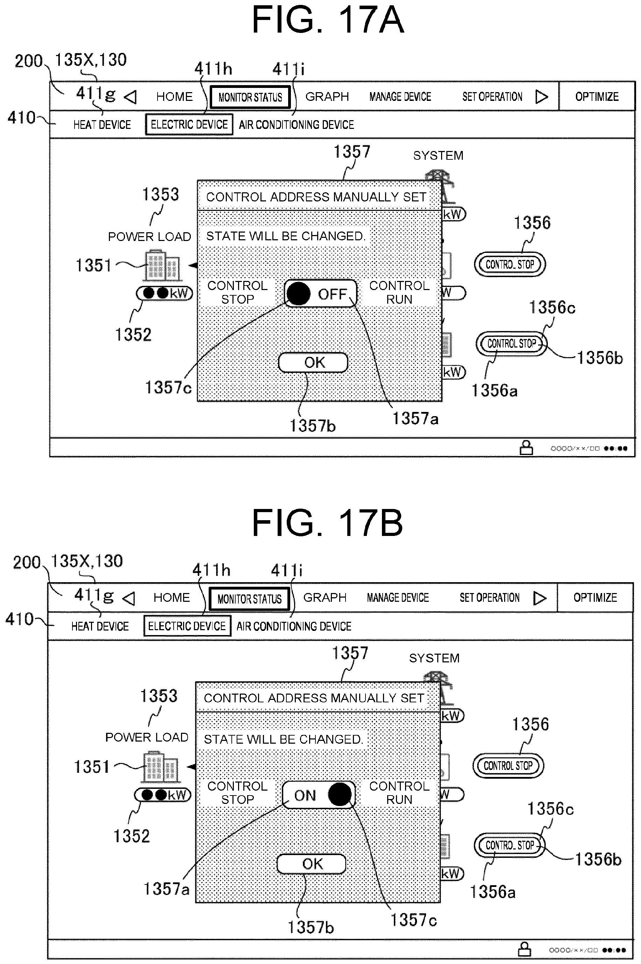

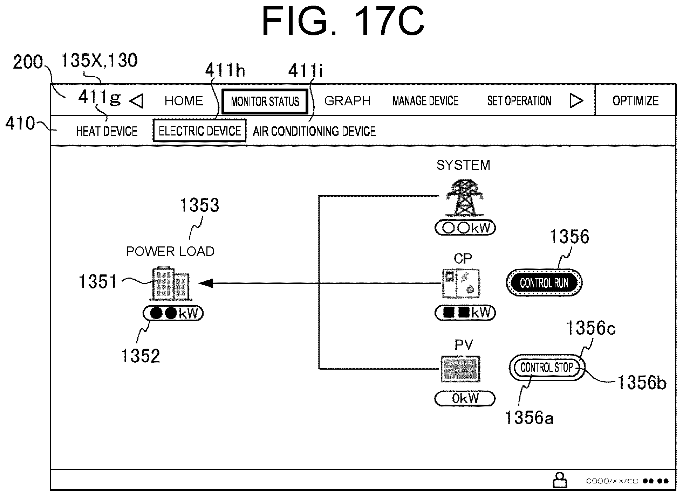

Figs. 17A, 17B, and 17C are diagrams for explaining about the operation of the control button 1356. Fig. 17A shows a screen example that is seen, in the state monitoring screen 135X shown in Fig. 16, when the control button 1356 to the right of the device icon 1351 showing the cogeneration system is operated by touch or the like. As shown in Fig. 17A, operating the control button 1356 causes a pop-up display 1357 to appear on the state monitoring screen 135X.

The pop-up display 1357 includes a switching operation area 1357a and an OK button 1357b. Sliding a slide portion 1357c, which is displayed by a black circle in the switching operation area 1357a, can make the switching between control stop (OFF) and control run (ON). In the present example, the cogeneration system was in a control stop state when the control button 1356 was operated, thus positioning the slide portion 1357c on the control stop side (left side).

Fig. 17B is a diagram showing the state of having operated the slide portion 1357c of the pop-up display 1357 shown in Fig. 17A. In detail, Fig. 17B is a diagram showing the state of having operated the slide portion 1357c from the state shown in Fig. 17A to the control run side (right side). In this state, operating the OK button 1357b fixes the selection of "Control Run". That is, the control state of the device is changed from the control stop (OFF) state to the control run (ON) state.

Fig. 17C is a diagram showing that, in Fig. 17B, the OK button 1357b has been operated (e.g., touched). As shown in Fig. 17C, changing from the control stop state to the control run state also changes display of the control button 1356. That is, the control button 1356 changes its display mode according to the control state of the device. This allows the user to confirm, on the state monitoring screen 135X, that the control state of the device has been changed.

As shown in Fig. 17A, etc., the control buttons 1356 displayed on the state monitoring screen 135X have a letter portion 1356a, a background area 1356b, and a frame area 1356c. The letter portion 1356a is a portion including a letter. In the present example, the letter portion 1356a includes letters "Control Stop" or "Control Run".

The background area 1356b is an area that is overlapped with the letter portion 1356a, thereby to be included in a background of the letter portion 1356a. In the present example, the background area 1356b has an area larger than an area in which the letter included in the letter portion 1356a is displayed. The background area 1356b is rectangular in shape, extending in the right/left direction. The frame area 1356c is a frame area that surrounds an external edge of the background area 1356b.

Changing the control state of the device properly changes the display modes of the letter portion 1356a, the background area 1356b, and the frame area 1356c.

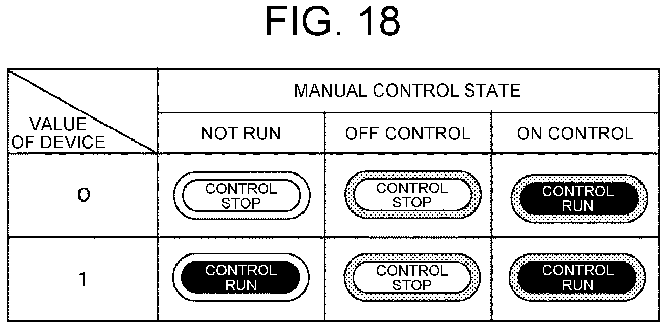

Fig. 18 is a diagram for explaining about the change in display mode of the control button 1356. In Fig. 18, "Value of Device" shows a control signal which the control unit 11 (see Fig. 2) possessed by the management system 100 automatically determines according to an operation setting. The control signal "0" means that the control is stopped (OFF, disabled), and the control signal "1" means that the control is running (ON, enabled). In Fig. 18, "Not Run of Manual Control State " shows a state in which the manual setting is not running. The "OFF Control of Manual Control State" shows a state in which the control stop is manually set. The "ON Control of Manual Control State" shows a state in which the control run is manually set. In the present example, the manually set control command has priority over the control command determined by the control unit 11.

As shown in Fig. 18, the display mode of the letter portion 1356a differs between the state in which the control of the device is stopped and the state in which the control of the device is running. In detail, the letters themselves are different, and the letter colors are different. The color of the letter is, as an example, black for control stop and white for control run. In addition, a state where being different is the letters themselves only while the letter color is the same is allowed.

Further, the display mode of the background area 1356b differs between the state in which the control of the device is stopped and the state in which the control of the device is running. In detail, the colors of the background area 1356b are different. In the present example, the background area 1356b is, as an example, white for control stop and black for control run. In addition, the difference in display mode of the background area 1356b may be, for example, hatched or not, rather than the difference in color.

In the present example, the control button 1356 is displayed in a different mode according to the reason why the device is in the current control state. In detail, the display mode of the frame area 1356c changes according to whether the reason for the current control state of the device is due to the automatic control by the control unit 11 or due to the manual control. In the case of the automatic control, the frame area 1356c is not hatched. The frame area 1356c is white. Meanwhile, when in the case of the manual control, the frame area 1356c is hatched. The difference in display mode of the frame area 1356c may not be hatched or not, but may be, for example, the difference in type of hatching or the difference in color.

In the example shown in Fig. 16, the control of the device is automatically stopped for the cogeneration system. Due to this, the letter in letter portion 1356a is "Control Stop" in black. The background area 1356b is white. The frame area 1356c is not hatched (white).

By using the control button 1356, making the cogeneration system from in the state shown in Fig. 16 to the control run means that the cogeneration system has been manually changed to the control run. Due to this, as shown in Fig. 17C, the letter in the letter portion 1356a is "Control Run" in white. The background area 1356b is black. The frame area 1356c is hatched.

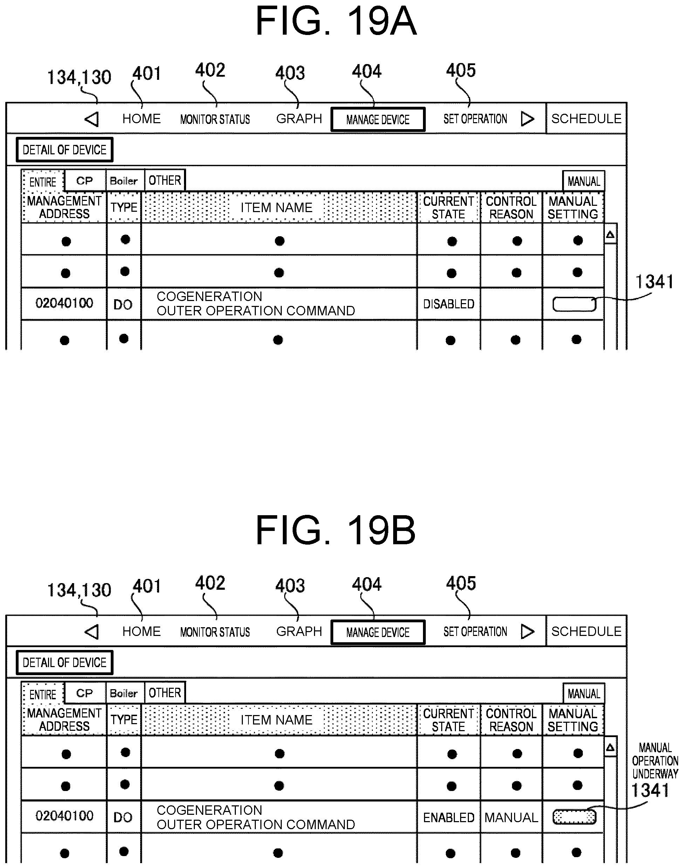

In the present example, the display unit 13 displays the device management screen 134 (see Fig. 19A, etc.) whose display content is changed in conjunction with the operation of the control button 1356. The device management screen 134 is a screen that shows a detailed state for each device. Displaying the device management screen 134 that is in conjunction with the state monitoring screen 135X can grasp the state of the device from various viewpoints, which is convenient. Further, the device management screen 134 is displayed by operating, such as touching, the device management button 404, as described above.

Figs. 19A and 19B are each a diagram for explaining that the device management screen 134 is in conjunction with the operation of the control button 1356. Fig. 19A exemplifies a part of the screen displayed when selecting the device management button 404 from the state of displaying the state monitoring screen 135X shown in Fig. 16. Fig. 19B exemplifies a part of the screen displayed when selecting the device management button 404 from the state of displaying the state monitoring screen 135X shown in Fig. 17C.

Note that, in the device management screens 134 shown in each of Figs. 19A and 19B, the "Management Address" is the address defined in the control unit 11 (see Fig. 2). "Type" shows input or output classification. "Item Name" is a specific name of the object whose input or output is managed. The "Current State" shows the current state of the input or output of each item managed by using the management address. The "Control Reason" shows the control-related reason for the current state of the input or output of each item managed by using the management address. The "Manual Setting" displays information related to the manual setting of the input information or output information of each item managed by using the management address. Further, the "Cogeneration" in each of Figs. 19A and 19B denotes cogeneration system.

As described above, in the example shown in Fig. 16, the cogeneration system is automatically controlled to stop by the control signal by the control unit 11. Corresponding to the above, in the device management screen 134 shown in Fig. 19A, the external operation command of the cogeneration system is "disabled" (control stop).

Assume that, in the state shown in Fig. 16, the control button 1356 caused to correspond to the cogeneration system is manually operated, thereby to start the running of the control of the cogeneration system, as shown in Fig. 17C. In this case, as shown in Fig. 19B, on the device management screen 134, the external operation command of the cogeneration system is "enabled" (Control Run). Further, the control reason for the external operation command of the cogeneration system is "Manual", and an operation button 1341 for switching the manual setting is displayed with the letters "Under Manual Operation". That is, the display content of the device management screen 134 is changed in conjunction with the operation of the control button 1356.

The above has shown that the display content of the device management screen 134 is changed in conjunction with the operation of the control button 1356 displayed on the state monitoring screen 135X. Similarly to the above, the display mode of the control button 1356 is changed in conjunction with the operation of operation button 1341 that switches the manual setting on the device management screen 134.

Also, in the present example; when the manual control is not running, the operation button 1341 that switches the manual setting on the device management screen 134 is not hatched. Meanwhile, when the manual control is running, the operation button 1341 that switches the manual setting on the device management screen 134 is hatched. This is similar to the method of changing the display mode of the frame area 1356c (hatched or not depending on whether or not by the manual control) of the control button 1356. That is, in the present example, the method of changing the display mode of the control button 1356 and the method of changing the display mode of the operation button for the manual setting on the device management screen 134 have commonality. Bringing about this uniformity makes it easy to grasp the screen display.

### <4. Notes, etc.>

The various technical features disclosed in the present specification can be modified in various ways without departing from the gist of the technical creation thereof. Further, the multiple embodiments and modified examples shown in the present specification may be combined to the extent possible.

### <5. Appendices>

An exemplary display unit in the present specification is a display unit of a management system that manages energy, wherein the display unit may have a configuration where the management system displays a state monitoring screen that shows an operation state of a device of the management system, and the state monitoring screen includes a device icon that shows the device (first configuration).

In the display unit having the first configuration, the device icon may have a configuration to be changed according to a type of the device (second configuration).

In the display unit having the first or second configuration, the state monitoring screen may have a configuration to include a numerical information area that shows the operation state in numerical value (third configuration).

In the display unit having any of the first to third configurations, the state monitoring screen may have a configuration to include a letter information area that shows information on the device in letter (fourth configuration).

In display unit having any of the first to fourth configurations, the state monitoring screen may have a configuration to include a connecting line that connects between the plural device icons (fifth configuration).

In the display unit having the fifth configuration, the connecting line may have a configuration to be changed in display mode according to a type or mode of the energy (sixth configuration).

In the display unit having any of the first to sixth configurations, the state monitoring screen may have a configuration to include an energy state display icon that shows an energy state associated with an operation of the device (seventh configuration).

In the display unit having any of the first to seventh configurations, at least one of a display position and size of the device icon may have a configuration to be so provided as to be changeable (eighth configuration).

In the display unit having any of the first to eighth configurations, the state monitoring screen may have a configuration to include a plurality of screens switchable according to a type of the device (ninth configuration).

In the display unit having any of the first to ninth configurations, the state monitoring screen may have a configuration to include a control state display area that shows a control state of the management system (tenth configuration).

In the display unit having any of the first to tenth configurations, the state monitoring screen may have a configuration to include a control button that causes a control state of the device to be changeable (eleventh configuration).

In the display unit having the eleventh configuration, the control button may have a configuration to be changed in display mode according to the control state of the device (twelfth configuration).

In the display unit having the eleventh or twelfth configuration, the display unit may have a configuration to display a device management screen having display content that changes in conjunction with an operation of the control button (thirteenth configuration).

### REFERENCE SIGNS LIST

2: renewable energy generating unit (device)
3: storage battery (device)
4: boiler (device)
5: heat pump (device)
6: hot water tank (device)
7: cogeneration system
13: display unit
100: management system
130: screen
134, 134A: device management screen
1341: manual setting area
1342: current state display area
1343: control reason display area
1346: manual tab (operation area)
135, 135X: state monitoring screen
500: control state display area
1351: device icon
1352: numerical information area
1353: letter information area
1354: connecting line
1355: energy state display icon
1356: control button

## Claims

1. A display unit of a management system that manages energy,
wherein the display unit changes a display state of a screen that displays information about the management system, according to an operator of the screen.

2. The display unit as claimed in claim 1, wherein
the display unit displays a device management screen that displays device management information including input and output information of a device of the management system, and
the device management screen has a manual setting area that enables a manual setting of input information or output information of the device.

3. The display unit as claimed in claim 2, wherein
an item that is settable by using the manual setting area changes according to the operator.

4. The display unit as claimed in claim 2 or 3, wherein
the device management screen has an operation area that displays the device management information only for the item set by using the manual setting area.

5. The display unit according to any one of claims 2 to 4, wherein
the device management screen has a current state display area that displays a current state of input or output of the device.

6. The display unit as claimed in claim 5, wherein
the device management screen has a control reason display area that displays a control reason for being the current state.

7. The display unit as claimed in any one of claims 2 to 6, wherein
the management system has a plurality of the devices, and
the device management screen is capable of displaying the device management information by switching for each of the devices.

8. A display unit of a management system that manages energy, wherein
the display unit displays a state monitoring screen that shows an operation state of a device of the management system, and
the state monitoring screen includes a device icon that shows the device.

9. The display unit as claimed in claim 8, wherein
the device icon is changed according to a type of the device.

10. The display unit as claimed in claim 8, wherein
the state monitoring screen includes a numerical information area that shows the operation state in numerical value.

11. The display unit as claimed in claim 8, wherein
the state monitoring screen includes a letter information area that shows information on the device in letter.

12. The display unit as claimed in claim 8, wherein
the state monitoring screen includes a connecting line that connects between the plural device icons.

13. The display unit as claimed in claim 12, wherein
the connecting line is changed in display mode according to a type or mode of energy.

14. The display unit as claimed in claim 8, wherein
the state monitoring screen includes an energy state display icon that shows an energy state associated with an operation of the device.

15. The display unit as claimed in claim 8, wherein
at least one of a display position and size of the device icon is so provided as to be changeable.

16. The display unit as claimed in claim 8, wherein
the state monitoring screen includes a plurality of screens switchable according to a type of the device.

17. The display unit as claimed in claim 8, wherein
the state monitoring screen includes a control state display area that shows a control state of the management system.

18. The display unit as claimed in claim 8, wherein
the state monitoring screen includes a control button that causes a control state of the device to be changeable.

19. The display unit as claimed in claim 18, wherein
the control button is changed in display mode according to the control state of the device.

20. The display unit as claimed in claim 18, wherein
the display unit displays a device management screen having display content that changes in conjunction with an operation of the control button.
